# EUROPEAN PATENT APPLICATION

(11) **EP 0 694 581 A2**
(43) Date of publication of application: **31.01.1996**
(21) Application number: 95304922.8
(22) Date of filing: 13.07.1995
(51) Int. Cl.: C08L 69/00, C08L 33/12

(54) **A polycarbonate resin composition**

(30) Priority: 25.07.1994 JP 192925/94
(71) Applicant: GENERAL ELECTRIC COMPANY, Schenectady, NY 12345 (US)
(72) Inventor: Liu, Chang Feng, Oyama City, Tochigi Prefecture (JP); Itoi, Hideyuki, Utsunomiya City, Tochigi Prefecture (JP)
(74) Representative: Szary, Anne Catherine

(57) **Abstract**

A thermoplastic polycarbonate resin composition having high compatibility and outstanding low-temperature impact resistance and tensile elongation comprises (A) 5-50 parts by weight of poly(methyl methacrylate), (B) 70-30 parts by weight of polycarbonate obtained by melt polymerization of an aromatic dihydroxy compound and a carbonic acid diester in which the equivalence ratio (I)/(II) of phenolic end groups (I) and non-phenolic end groups (II) is 1/19 or above, and (C) 1-40 parts by weight of an impact-resistance-improving agent.

## Description

The present invention relates to a polycarbonate resin composition which uses aromatic polycarbonate having a special phenylene end group (also abbreviated below as PC) and polymethyl methacrylate (also abbreviated below as PMMA), and particularly, to a polycarbonate resin composition showing favorable compatibility, thus making it possible to achieve favorable weld line strength and outstanding low-temperature impact resistance compared to ordinary polycarbonate PC/PMMA blends.

Aromatic polycarbonate resins show outstanding thermal resistance, impact resistance, and mechanical strength, and they are in widespread use as high-performance resins, i.e., engineering plastics. Various resin blends which make use of the properties of aromatic polycarbonate are also known.

For example, a technological improvement with respect to two-component polymer alloys of polycarbonate/polymethyl methacrylate which use aromatic polycarbonate having a phenolic end group has been presented in Japanese Laid-Open Patent Application No. 94-74018, submitted by the present Applicant.

This polymer alloy shows improved properties of impact resistance and tensile elongation properties. However, its impact resistance, as measured by the notched Izod test, remains insufficient for certain applications.

The physical properties of molded products made of this type of polycarbonate resin composition require further improvement, for example, for applications in portable devices such as thin-walled housings, cases, etc., which must be compact and lightweight.

The purpose of the present invention is to provide a polycarbonate resin composition which displays high weld line strength and outstanding low-temperature impact resistance compared to conventional polycarbonate resin compositions.

The present invention solves the above problems by comprising a polycarbonate resin composition which contains (A) 5-50 parts by weight of poly(methyl methacrylate), (B) 70-30 parts by weight of polycarbonate obtained by melt polymerization of an aromatic dihydroxy compound and carbonic acid diester in which the equivalence ratio (I)/(II) of phenolic end groups (I) and non-phenolic end groups (II) is 1/19 or above, and (C) 1-40 parts by weight of an impact resistance improving agent.

The polymethyl methacrylate (PMMA) of component (A) of the present invention is a thermoplastic resin whose main component is methyl methacrylate. However, it may also contain other alkyl esters of methacrylic acid such as ethyl methacrylate, propyl methacrylate, isopropyl methacrylate, n-butyl acrylate, isobutyl acrylate, amyl acrylate, and hexyl acrylate.

The polycarbonate of component (B) of the present invention is obtained by melt polymerization of an aromatic dihydroxy compound and a carbonic acid diester, and its equivalence ratio (I)/(II) of phenolic end groups (I) to non-phenolic end groups (II) is 1/19 or above, and preferably 1/10 or above, with a ratio of 1/5 or above being particularly preferred. If said ratio is 1/19 or less, compatibility with the thermotropic liquid crystal polyester will not be improved, layer peeling will occur, and mechanical strength will be reduced, producing an undesirable result.

Moreover, the above phenolic end group (I) should preferably have the following formula: 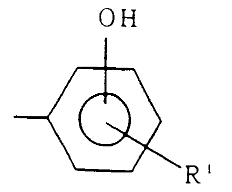
and the non-phenolic end group (II) should preferably have the following formula: 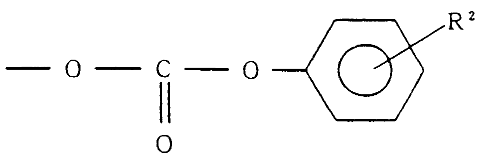
In the above formulas, R¹ and R indicate individual hydrogen atoms or halogen atoms having 20 or fewer carbon atoms and being straight-chain or branched-chain, and preferably an alkyl group substituted with fluorine. chlorine, or bromine.

Adjustment of the equivalence ratio of the end groups in the aforementioned polycarbonate can easily be carried out during manufacturing of the polycarbonate by melt polymerization through modification of the molar ratio of the raw material aromatic dihydroxy compound and the carbonic acid diester.

For example, when bisphenol A is used as the aromatic dihydroxy compound and diphenyl carbonate is used as the carbonic acid diester, the end group of the polycarbonate will be a phenolic residue derived from bisphenol A or a phenyl group derived from diphenyl carbonate, and when the molar ratio of bisphenol A is increased, the molar ratio (I)/(II) of the phenolic end groups (I) and non-phenolic end groups (II) in the polycarbonate produced will become high.

This polycarbonate may also be branched. This type of branched polycarbonate can be obtained in the form of randomly-branched thermoplastic carbonate by reacting a polyfunctional aromatic compound with a diphenol and/or carbonate precursor.

In the case of the polycarbonate generally used in the past, particularly polycarbonate obtained by the method of reacting an aromatic dihydroxy compound such as bisphenol A with phosgene (particularly the surface method), the equivalence ratio (I)/(II) of the phenolic end groups (I) to the non-phenolic end groups (II) is 1/19 or less, producing an unfavorable result.

The method of manufacturing of the polycarbonate of the present invention is known in and of itself, and it is a method for synthesizing polycarbonate by carrying out an ester exchange reaction with the aromatic dihydroxy compound and the carbonic acid diester in a molten state.

There are no particular restrictions on the aromatic dihydroxy compound, with a variety of commonly-known compounds being suitable for use. Examples include compounds having the following formula: 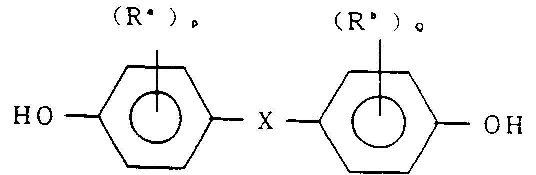
(where R^{a} and R^{b} are individual halogens or univalent hydrocarbon groups, X is - C (R^{c})(R^{d})-, -C (=R^{e})-, -O-, -S-, -SO-, or -SO₂-, R^{c} and R^{d} are individual hydrogen atoms or univalent hydrocarbon groups, R^{e} is a bivalent hydrocarbon group, and p and q are individual integers from 0-4), such as a bis(hydroxyaryl)alkane including bis(4-hydroxyphenyl)methane, 1,1-bis(4-hydroxyphenyl)ethane, 2,2-bis(4-hydroxyphenyl)propane, 2,2-bis(4-hydroxy-phenyl)butane, 2,2-bis(4-hydroxyphenyl)octane. bis(4-hydroxyphenyl)phenylmethane, 2,2-bis(4-hydroxy-1-methylphenyl)propane, 1,1-bis(4-hydroxy-t-butylphenyl)propane, or 2,2-bis(4-hydroxy-3-bromophenyl)propane; a bis(hydroxyaryl)cycloalkane such as 1,1-bis(4-hydroxyphenyl)cyclopentane, or 1.1-(4-hydroxyphenyl)cyclohexane; a dihydroxyaryl ether such as 4,4'-dihydroxydiphenyl ether or 4,4'-dihydroxy-3,3'-dimethyldiphenyl ether: a dihydroxydiaryl sulfide such as 4,4'-dihydroxydiphenyl sulfide or 4,4'-dihydroxy-3,3'-dimethyldiphenyl sulfide; a dihydroxydiaryl sulfoxide such as 4,4'-dihydroxydiphenyl sulfoxide or 4,4'-dihydroxy-3,3'-dimethyldiphenyl sulfoxide; or a dihydroxydiaryl sulfone such as 4,4'-dihydroxydiphenyl sulfone or 4,4'-dihydroxy-3,3'-dimethyldiphenyl sulfone. but the compound is not limited to the above. Among these compounds, the use of 2,2-bis(4-hydroxyphenyl)propane is particularly preferred. In addition to the above, as the aromatic dihydroxy compound, one may also use a compound having the following general formula: 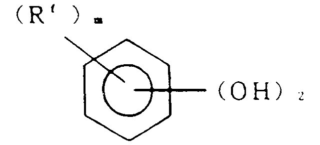
(where R^{f} indicates individual hydrocarbon groups having 1-10 carbon atoms or their halogen compounds or halogen atoms and m is an integer from 0 to 4), such as resorcinol and substituted resorcinol, including 3-methylresorcinol. 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, or 2,3,4,6-tetra-bromoresorcinol; catechol; or hydroquinone or a substituted hydroquinone such as 3-methylhydroquinone, 3-ethylhydroquinone, 3-propylhydroquinone, 3-butyl-hydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetra-fluorohydroquinone, or 2,3,5,6-tetrabromohydroquinone, etc., or a compound such as 2,2,2',2'-tetrahydro-3,3,3',3'-tetramethyl-1,1'-spirobis-[1H-indene]-7,7'-diol having the following formula:

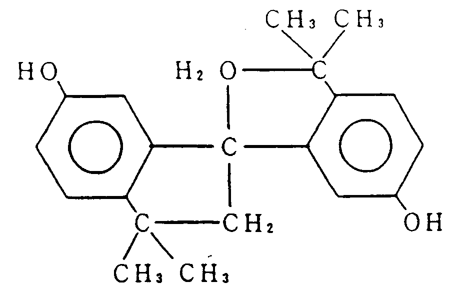

These aromatic dihydroxy compounds may be used alone or in combinations of two or more.

There are also no particular limitations on the carbonic acid diester used in the present invention, with examples including diphenyl carbonate, ditolyl carbonate, bis(chlorophenyl) carbonate, m-cresyl carbonate, dinaphthyl carbonate. bis(diphenyl) carbonate, diethyl carbonate, dimethyl carbonate, dibutyl carbonate, or dicyclohexyl carbonate, but the substance is not limited to these. Diphenyl carbonate should preferably be used.

These carbonic acid esters may also be used alone or in combinations of two or more.

The aforementioned carbonic acid diester may contain a dicarboxylic acid or a dicarboxylic acid ester. Examples of the dicarboxylic acid or carboxylic acid ester include aromatic carboxylic acids such as terephthalic acid, isophthalic acid, diphenyl terephthalate, or diphenyl isophthalate; aliphatic dicarboxylic acids such as succinic acid, glutaric acid, adipic acid, pimelic acid, suberic acid, azelaic acid, sebacic acid, decanedioic acid, dodecanedioic acid, diphenyl sebacate, diphenyl decanedioate, or diphenyl dodecanedioate; and aliphatic dicarboxylic acids such as dichloropropanedicarboxylic acid, 1,2-cyclopropanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, diphenyl cyclopropanedicarboxylate, diphenyl 1,2-cyclobutanedicarboxylate, diphenyl 1,3-cyclobutanedicarboxylate, diphenyl 1,2-cyclopentanedicarboxylate, diphenyl 1,3-cyclopentanedicarboxylate, diphenyl 1,2-dicyclohexanedicarboxylate, diphenyl 1,3-cyclohexanedicarboxylate, or diphenyl 1,4-cyclohexaneodicarboxylate.

These dicarboxylic acids or dicarboxylic acid esters may be used alone or in combinations of two or more. The dicarboxylic acid or dicarboxylic acid ester should be contained in the aforementioned carbonic acid diester in an amount of 50 mole % or less, and preferably 30 mole % or less.

In manufacturing polycarbonate, together with the aromatic dihydroxy compound and carbonic acid diester, a polyfunctional compound having three or more functional groups per molecule may also be used. A compound having a phenolic hydroxyl group or a carboxyl group should preferably be used as this polyfunctional compound, with compounds containing three phenolic hydroxyl groups being particularly preferred.

Specific examples of the preferred compound include 1,1,1-tris(4-hydroxyphenyl)ethane, 2,2',2''-tris(4-hydroxyphenyl)diisopropyl benzene, α-methyl-α,α',α'-tris(4-hydroxyphenyl)-1,4-diethylbenzene, α,α',α''-tris(4-hydroxy-phenyl)-1,3,5-triisopropylbenzene, phloroglucinol, 4,6-dimethyl-2,4-6-tris(4-hydroxy-phenyl)-heptane-2 [sic], 1,3,5-tris(4-hydroxyphenyl)benzene, 2,2-bis-[4,4-(4,4'-di hydroxyphenyl)cyclohexyl]propane, trimellitic acid, 1,3,5-benzenetricarboxylic acid, and pyromellitic acid.

The use of 1,1,1-tris(4-hydroxyphenyl)ethane or α,α'-α''-tris(4-hydroxyphenyl)-1,3,5-triisopropylbenzene, etc., is particularly preferred. The polyfunctional compound should preferably be present in the amount of 0.03 moles or less with respect to 1 mole of the aromatic dihydroxy compound, and more preferably in the amount of 0.001-0.02 moles, with 0.001-0.01 moles being particularly preferred.

Moreover, in manufacturing the polycarbonate, one may also use a compound in which one or more end groups having the following formulas: 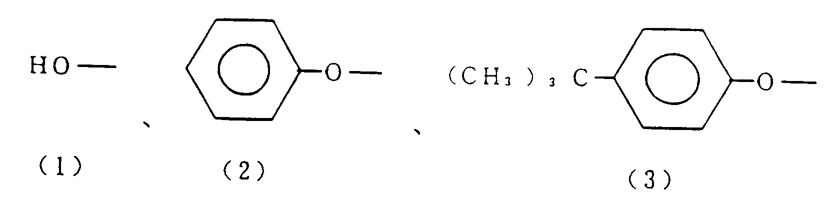 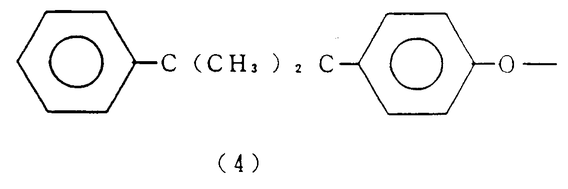 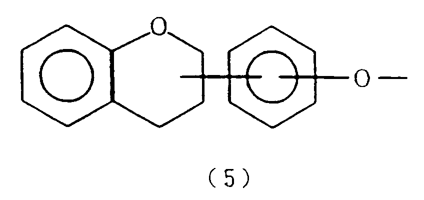
(where the aromatic ring or chromanyl group may be substituted with a halogen or an alkyl group having 1-9 carbon atoms) can be introduced. Examples of the compound of (1) in which the hydroxyl group can be introduced include diol compounds such as bisphenol A. Moreover, one can also mention phenol, diphenyl carbonate, etc., as examples of the compound of (2) in which a phenoxy group can be introduced; p-t-butylphenol. p-t-butylphenylphenyl carbonate, p-t-butylphenyl carbonate, etc., as examples of the compound of (3) in which a p-t-butylphenoxy group may be introduced; and p-cumylphenol, p-cumylphenylphenyl carbonate, p-cumylphenyl carbonate, etc., as examples of the compound of (4) in which a p-cumylphenoxy group (p-phenylisopropylphenoxy group) may be introduced. One can mention a chromanyl group, etc., having the following formula: 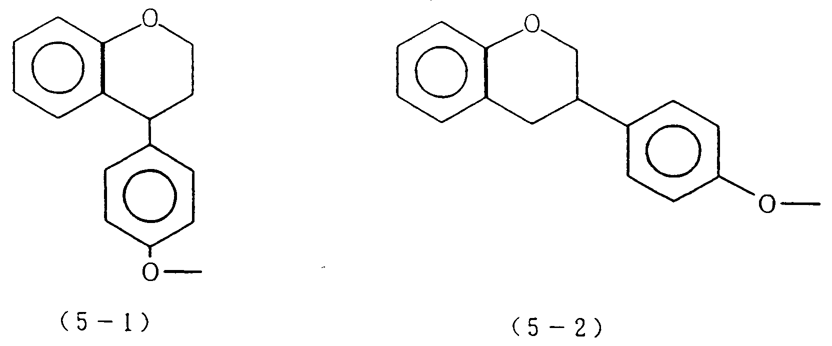 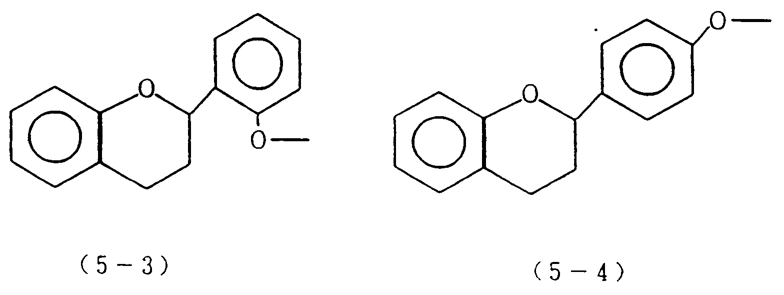
as an example of the chromanylphenoxy group of (5) in the above formula. The following can be mentioned as examples of the compound in which the group of (5-1) may be introduced: 2,2,4-trimethyl-4-(4-hydroxyphenyl)chroman, 2,2,4,6-tetramethyl-4-(3,5-dimethyl-4-hydroxyphenyl)chroman, 2,3,4-trimethyl-2-ethyl-4-(3-nonyl-4-hydroxyphenyl)-7-nonylchroman, 2,2,4-trimethyl-4-(3,5-diethyl-4-hydroxyphenyl)-6-ethylchroman, 2,2,4,6,8-pentamethyl-4-(3,5-dimethyl-4-hydroxyphenyl)chroman, 2,2,4-triethyl-3-methyl-4-(4-hydroxyphenyl)chroman, 2,2,4-trimethyl-4-(3-bromo-4-hydroxyphenyl)chroman, 2,2,4-trimethyl-4-(3-bromo-4-hydroxyphenyl)-6-bromochroman, 2,2,4-trimethyl-4-(3,5-dibromo-4-hydroxyphenyl)-6-bromochroman, 2,2,4-trimethyl-4-(3,5-dibromo-4-hydroxyphenyl)-6,8-dibromochroman, etc., and of these substances, 2,2,4-trimethyl-4-(4-hydroxyphenyl)chroman is particularly preferred; examples of the compound in which the base of (5-2) may be introduced include 2,2,3-trimethyl-3-(4-hydroxyphenyl)chroman, 2,2,3,6-tetramethyl-3-(3,5-dimethyl-4-hydroxyphenyl)chroman, 2,3,4-trimethyl-2-ethyl-3-(3-nonyl-4-hydroxyphenyl)-7-nonylchroman, 2,2,3-trimethyl-3-(3,5-diethyl-4-hydroxyphenyl)-6-ethylchroman, 2,2,3,6,8-pentamethyl-3-(3,5-dimethyl-4-hydroxyphenyl)chroman, 2,2,3-triethyl-3-methyl-3-(4-hydroxyphenyl)chroman, 2,2,3-trimethyl-3-(3-bromo-4-hydroxyphenyl)-6-bromochroman, 2,2,3-trimethyl-3-(3,5-dibromo-4-hydroxyphenyl)-6-bromochroman, 2,2,3-trimethyl-3-(3,5-dibromo-4-hydroxyphenyl)-6,8-dibromochroman, etc., with 2,2,3-trimethyl-3-(4-hydroxyphenyl)chroman being preferred; examples of the compound in which the group of (5-3) may be introduced include 2,4,4-trimethyl-2-(2-hydroxyphenyl)chroman, 2,4,4,6-tetramethyl-2-(3,5-dimethyl-2-hydroxyphenyl)chroman, 2,3,4-trimethyl-4-ethyl-2-(3,5-dimethyl-2-hydroxyphenyl)-7-nonylchroman, 2,4,4-trimethyl-2-(3,5-dimethyl-2-hydroxyphenyl)-6-ethylchroman, 2,4,4,6,8-pentamethyl-2-(3,5-dimethyl-2-hydroxyphenyl)-6-ethylchroman, 2,4,4-trimethyl-2-(3-bromo]-2-hydroxyphenyl)chroman, 2,4,4-trimethyl-2-(3-bromo-2-hydroxyphenyl)-6-bromochroman, 2,4,4-trimethyl-2-(3,5-dibromo-2-hydroxyphenyl)-6-bromochroman, 2,4,4-trimethyl-2-(3,5-dibromo-2-hydroxyphenyl)-6,8-dibromochroman, etc., with 2,4,4-trimethyl-2-2-(hydroxyphenyl)chroman being preferred; examples of compounds in which the group of (54) may be introduced include 2,4,4-trimethyl-2-(4-hydroxyphenyl)chroman, 2,4,4,6-tetramethyl-2-(3,5-dimethyl-4-hydroxyphenyl)chroman, 2,4,4-triethyl-2-(4-hydroxyphenyl)chroman, 2,3,4-trimethyl-4-ethyl-2-(3,5,5-dimethyl-4-hydroxyphenyl)-7-nonylchroman, 2,4,4-trimethyl-2-(3,5-diethyl-4-hydroxyphenyl)-6-ethylchroman, 2,4,4,6,8-pentamethyl-2-(3,5-dimethyl-4-hydroxyphenyl)-6-ethylchroman, 2,4,4-trimethyl-2-(3-bromo-4-hydroxyphenyl)chroman, 2,4,4-trimethyl-2-(3-bromo-4-hydroxyphenyl)-6-bromochroman, 2,4,4-trimethyl-2-(3,5-dibromo-4-hydroxyphenyl)-6-bromochroman, and 2,4,4-trimethyl-2-(3,5-dibromo-4-hydroxyphenyl)-6,8-dibromochroman, etc., with 2,4,4-trimethyl-2-(4-hydroxyphenyl)chroman being preferred.

The aforementioned aromatic ring or aliphatic ring may be further substituted with a halogen or an alkyl group having 1-9 carbon atoms. These compounds may be used alone or in combinations of two or more.

The carbonic acid diester should preferably be used in the amount of 1.00-1.30 moles, and particularly 1.01-1.20 moles, for each mole of the aromatic dihydroxy compound, and the two substances should preferably be reacted in the presence of a catalyst.

The compound disclosed in the Specification of Japanese Laid-Open Patent 2-175368, submitted by the present Applicant, may be used as the catalyst. As examples, organic acid salts, inorganic acid salts, oxides. hydroxides, hydrides, or alcoholates of metals such as (a) alkali metals or alkaline earth metals should preferably be used. Specific examples of these compounds include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium hydroxyborate, lithium hydroxyborate. sodium boron phenylate, sodium benzoate, potassium benzoate, lithium benzoate. disodium hydrogen phosphate, dipotassium hydrogen phosphate, dilithium hydrogen phosphate, disodium salts, dipotassium salts, and dilithium salts of bisphenol A. sodium salts, potassium salts, and lithium salts of phenol, etc.; and calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate. magnesium carbonate, strontium carbonate, calcium acetate, barium acetate, magnesium acetate. strontium acetate. and strontium stearate, etc., but the invention is not limited to these substances. These compounds may be used alone or in combinations of two or more. These alkali metal compounds and/or alkaline earth metal compounds should preferably contain 10⁻⁸-10⁻³ moles and more preferably 10⁻⁷-10⁻⁶ moles for each mole of the aromatic dihydroxy compound, with the amount of 10⁻⁷-8 x 10⁻⁷ being particularly preferable.

Moreover. a basic compound (b) may be used as a catalyst together with the aforementioned alkali metal compound and/or alkaline earth metal compound. An example of the basic compound is a nitrogen compound, specifically an ammonium hydroxide having an alkyl, aryl, or aralkyl group such as tetramethylammonium hydroxide, tetraethylammonium hydroxide, tetrabutylammonium hydroxide, or trimethylbenzylammonium hydroxide: a tertiary amine such as trimethylamine, triethylamine, dimethylbenzylamine, or triphenylamine; a secondary or primary amine having an alkyl group such as a methyl group or ethyl group or an aryl group such as a phenyl group or tolyl group; ammonia; or basic salts such as tetramethylammonium borate, tetrabutylammonium hydroxyborate, tetrabutylammonium tetraphenylborate, or tetramethylammonium tetraphenylborate, but the invention is not limited to these substances. Among the above, ammonium hydroxides are particularly preferred. These basic compounds may be used either individually or in groups of two or more.

As component (B) above uses a combination of
(a) an alkali metal compound and/or an alkaline earth metal compound. and
(b) a nitrogen-containing basic compound

as a catalyst, this makes it possible to obtain high-molecular-weight polycarbonate having a high degree of polymer activity.

Alternatively, one may use a composition consisting of at least one of the following:
(a) an alkali metal compound and/or alkaline earth metal compound,
(b) a nitrogen-containing basic compound, or
(c) boric acid or boric acid ester.

In cases where a catalyst consisting of this type of combination is used, it is preferable to use the alkali metal and/or alkaline earth metal of (a) in the amount described above and the nitrogen-containing basic compound of (b) in the amount of 10⁻⁶-10⁻¹ moles, and preferably 10⁻⁵-10⁻ moles, for each mole of the aromatic dihydroxy compound. A compound having the following general formula:

B(OR³)_{n'}OH)_{3-n'}

(where R³ is a hydrogen atom. an aliphatic hydrocarbon group, an alicyclic hydrocarbon group, or an aromatic hydrocarbon group, and n' is an integer from 1 to 3) should preferably be used as the boric acid or boric acid ester of (c), with examples including boric acid, trimethyl borate. triethyl borate, tributyl borate. trihexyl borate, triheptyl borate, triphenyl borate. tritolyl borate. and trinaphthyl borate. Among these substances. triphenyl borate is preferred. When the boric acid or boric acid ester of (c) is used as a catalyst together with the aforementioned (a) and (b), the amount used should be 10⁻⁶-10⁻¹ moles, and preferably 10⁻⁵-10⁻ moles for each mole of the aromatic dihydroxy compound.

The conditions such as temperature and pressure used in the melt polymerization reaction may be selected as desired, and commonly-known conditions may be used. Specifically, the first stage reaction should be carried out at a temperature of 80-250°C, and preferably 100-230°C, with a temperature of 120-190°C being particularly preferable. It should be carried out for a period of 0-5 hours, and preferably 04 hours, with a period of 0.25-3 hours being particularly preferred, and should be carried out at constant pressure. Next, keeping the reaction system at reduced pressure, the reaction temperature is increased and the reaction between the aromatic dihydroxy compound and the carbonic acid diester is carried out. Finally, the reaction between the aromatic hydroxy compound and the carbonic acid diester should preferably be carried out at a pressure of 0.05-5 mmHg and a temperature of 240-320°C.

The aforementioned reaction between the aromatic dihydroxy compound and the carbonic acid diester may be carried out either continuously or by the batch method. Moreover, the reaction device used in conducting the aforementioned reaction may be of the tank, tube, or tower type.

Examples of component (C) of the polycarbonate resin composition of the present invention include α,β-unsaturated carboxylic acid esters such as methyl (meth)acrylate, ethyl (meth)acrylate, propyl (meth)acrylate, butyl (meth)acrylate. 2-ethyl(meth)acrylate, and 2-ethylhexyl methacrylate; α,β-unsaturated dicarboxylic acid anhydrides such as anhydrous maleic acid and anhydrous itaconic acid; and α,β-unsaturated dicarboximide compounds such as maleimide, N-methylmaleimide. Nethylmaleimide, N-phenylmaleimide, or N-o-chlorophenylmaleimide, and these substances may be used individually or in combinations of one or two or more.

The copolymer of component (C) should preferably be a graft copolymer produced by graft copolymerization with other components in the presence of a rubber polymer, etc., with ABS resin (acrylonitrile-butadiene-styrene copolymer). AES resin (acrylonitrile-ethylene-propylene-styrene copolymer). ACS resin (acrylonitrile-polyethylene chloride-styrene copolymer), and AAS resin (acrylonitrile-acrylic elastomeric polymer-styrene copolymer) being particularly preferable.

There are no particular limitations on the composition ratio of the various components making up component (C), and various components which are suitable for application are blended in. Moreover, there are also no particular restrictions on the method of manufacturing the copolymer of component (C), and any commonly-known method, such as block polymerization, solution polymerization, block suspension polymerization, suspension polymerization, or emulsion polymerization. may be used. Moreover, individually copolymerized resins may also be obtained by blending.

Component (C) should be added in the amount of 0.545 parts by weight, and preferably in the amount of 140 parts by weight. If the amount of component (C) is less than 1 part by weight. the effect of the present invention will not be manifested. and if it is greater than 40 parts by weight, the hardness of the molded product obtained will be diminished.

Manufacturing of molded products by means of the polycarbonate resin composition of the present invention may be carried out using any common molding process. such as injection molding, extrusion molding, blow molding, or compression molding.

Moreover, in adding the aforementioned additives to the polycarbonate resin composition of the present invention, beginning with reinforcing agents such as glass fibers, carbon fibers. metal whiskers. etc.. one may also blend in commonly-known additives. including fillers such as carbon black. calcium carbonate, and glass beads. lubricants such as paraffin wax or silicone oil. antioxidants such as binder phenol, weatherproofing additives such as epoxy monomers or triazine. and flame retardants such as halogen-type or phosphoric acid-type flame retardants.

In addition. polymers such as polycarbonate. polybutylene terephthalate. polyethylene terephthalate. polyethylene, polyethylene-propylene copolymer. etc.. may also be used in combination.

### Examples

The following is a further explanation of the present invention by means of practical examples. The word "parts" in the practical examples indicates parts by weight.

Materials used in implementing the thermoplastic resin composition of the present invention include the following.

For polycarbonate (1), the polycarbonate resin Lexan 141® (trade name; manufactured by General Electric), which contains less than 1% phenolic end groups, was used.

For polycarbonate (40), low-terminal-capped LX polycarbonate (trade name: manufactured by Nihon G.E. Plastics K.K.). which contains 40% phenolic end groups, was used.

VH1 (trade name; manufactured by Mitsubishi Rayon K.K.) was used as polymethyl methacrylate (PMMA). In addition. Acripet (trade name; manufactured by Mitsubishi Rayon K.K.) and Sumipex (trade name: manufactured by Sumitomo Kagaku K.K.) may be used.

UX050 (trade name; manufactured by Ube Saikon K.K.) was used as acrylonitrile-butadiene-styrene copolymer (ABS) resin.

The MMA-butyl acrylate copolymer EXL2311(trade name; manufactured by Kureha Kagaku K.K.) was also used.

Melt kneading of the various raw materials such as polycarbonate and PMMA was carried out using a 30 mm twin screw extruder manufactured by Toshiba Kikai K.K. The extrusion conditions were set at a screw revolution speed of 150 rpm and a barrel temperature of 260°C. and pellets were manufactured.

In order to confirm the physical properties of the resin composition obtained in this manner, the following tests were carried out. In carrying out testing according to ASTM standards, the test pieces were prepared using an 80 t injection molding machine manufactured by Toyo Kikai Kinzoku K.K., with a barrel temperature of 260°C and a mold temperature of 60°C.

The composition ratio for the composition and the test results are shown in Tables 1 and 2.

**Table 1.**

| Comparative table of practical examples and comparative examples | | | | |
|---|---|---|---|---|
| | Practical examples | | Comparison examples | |
| | 1 | 2 | 1 | 2 |
| Components (parts) | | | | |
| PC (1) | | | 60 | 57 |
| PC (40) | 60 | 57 | | |
| PMMA | 30 | 25 | 30 | 25 |
| ABS | 10 | 18 | 10 | 18 |
| Evaluation results | | | | |
| Weld line impact strength kgcm/cm | 55 | 62 | 9 | 11 |
| Weld line fracture energy kgf-cm | 110 | 127 | 62 | 84 |
| Weld line elongation % | 8.3 | 9.5 | 5.6 | 5.9 |
| NII, RT, kgcm/cm | 46 | 50 | 40 | 45 |
| NII, -30°C kgcm/cm | 13.5 | 27 | 8.0 | 9.5 |

Moreover as the action of the impact-resistance-improving agent used in this polymer blend produces favorable compatibility between the PC (40) phase and the PMMA phase, the breaking energy of the PC (40/PMMA blend is also high. This blend provides an effect superior to conventional products in impact strength, fracture energy, and elongation of the weld line.

**Table 2.**

| Comparative table of practical examples and comparison examples | | | | |
|---|---|---|---|---|
| | Practical examples | | Comparative examples | |
| | 3 | 4 | 3 | 4 |
| Components (parts) | | | | |
| PC (1) | | | 60 | 57 |
| PC (40) | 60 | 57 | | |
| PMMA | 30 | 25 | 30 | 25 |
| ABS | 10 | 18 | 10 | 18 |
| Evaluation results | | | | |
| Weld line impact strength kgcm/cm | 50 | 62 | 11 | 15 |
| Weld line fracture energy kgf-cm | 96 | 105 | 48 | 57 |
| Weld line elongation % | 6.5 | 7.0 | 5.0 | 5.1 |
| NII, RT, kgcm/cm | 52 | 63 | 46 | 55 |
| NII, -30°C kgcm/cm | 14.5 | 30.5 | 8.4 | 12.8 |

The PMMA blended into the polycarbonate resin composition of the present invention shows outstanding UV stability, and molded products obtained using this resin composition show improved weather resistance compared to conventional products. Accordingly, it can be used to produce molded products which are suitable for outdoor applications such as window frames and interior and exterior automobile furnishings.

Moreover, the impact resistance improving agent improves the compatibility of the low-terminal-capped polycarbonate PC (40) with other polymers, it displays favorable mechanical properties. and it can be expected to be used in a wide variety of applications.

## Claims

1. A polycarbonate resin composition containing (A) 5-50 parts by weight of poly(methyl methacrylate), (B) 70-30 parts by weight of polycarbonate obtained by melt polymerization of an aromatic dihydroxy compound and a carbonic acid diester in which the equivalence ratio (I)/(II) of phenolic end groups (I) and non-phenolic end groups (II) is 1/19 or above, and (C) 1-40 parts by weight of an impact-resistance-improving agent.

2. The polycarbonate resin composition of Claim 1, in which the aforementioned phenolic end group (I) has the formula : 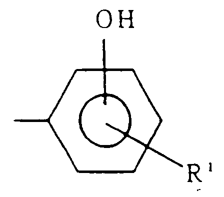 and the non-phenolic end group (II) has the formula : 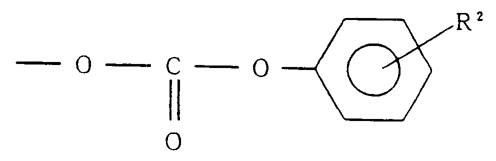 (in the formula, R¹ and R indicate individual hydrogen atoms or alkyl groups which have 20 or fewer carbon atoms, are straight-chain or branched-chain, and are non-substituted or halogen-substituted).

3. The polycarbonate resin composition of Claim 1 or Claim 2, in which the aforementioned impact-resistance-improving agent is acrylonitrile-styrenebutadiene resin (ABS).

4. The polycarbonate resin composition of Claim 1 or Claim 2, in which the aforementioned impact-resistance-improving agent is an acrylic impact-resistance-improving agent.
